# EUROPEAN PATENT APPLICATION

(11) **EP 3 176 692 A1**
(43) Date of publication of application: **07.06.2017**
(21) Application number: 14900708.0
(22) Date of filing: 29.08.2014
(51) Int. Cl.: G06F 9/38

(54) **INSTRUCTION EXECUTION METHOD AND PROCESSOR**

(71) Applicant: Huawei Technologies Co. Ltd., Shenzhen, Guangdong 518129 (CN)
(72) Inventor: ZHAO, Changyong, Shenzhen Guangdong 518129 (CN)
(74) Representative: Pfenning, Meinig & Partner mbB
(86) International application number: PCT/CN2014/085555
(87) International publication number: WO 2016/029444

(57) **Abstract**

An instruction execution method and a processor are provided, where the method includes: sending, by a token management unit, a first read token to a first instruction execution unit, where the first read token is used to instruct the first instruction execution unit to read an operand of a first instruction that is to be executed (S301); reading, by the first instruction execution unit, the operand of the first instruction according to an instruction of the first read token (S302); releasing the first read token (S303); after determining the release of the first read token, sending, by the token management unit, a second read token to a second instruction execution unit (S304); executing, by the first instruction execution unit, the first instruction according to the operand of the first instruction (S305); and writing an execution result into a register set (S306). In the method, an instruction execution unit releases a read token in time in a process of executing an instruction, which provides convenience for a token management unit to allocate a read token to an execution unit of a next instruction, so that the token management unit can perform coordinated management and control on a read token, thereby ensuring instruction execution efficiency.

## Description

### TECHNICAL FIELD

Embodiments of the present invention relate to the computer field, and more specifically, to an instruction execution method and a processor.

### BACKGROUND

In a synchronous processor, a system is based on a clock, or in other words, is synchronous. The system includes a subsystem, and the subsystem stores various states by using a trigger (or a register), and a change from one state to another depends on a global clock signal. An update of the states in the trigger is finished at an edge of the clock signal. Performance of the synchronous processor is affected by a worst link. For processing capability improvement of the synchronous processor, a general method is increasing a global clock frequency. However, a higher frequency leads to higher power consumption.

An asynchronous processor does not have a global clock, or even a clock. A subsystem of the asynchronous processor is a self-timing system that performs a pipeline operation by binding a communications protocol, or drives, by controlling generation and transmission of a clock, a functional circuit to work. An instruction of the asynchronous processor may be executed at a speed as high as possible, and power consumption of the asynchronous processor is significantly reduced.

A conventional asynchronous processor uses a muller-c circuit to implement an asynchronous pipeline and process data in a request-answer manner. However, such an asynchronous pipeline is not compact. In addition, access by a multi-stage pipeline for resource contention is excessively complex, causing low processing efficiency.

### SUMMARY

Embodiments of the present invention provide an instruction execution method and a processor, and the method is highly efficient in processing.

A first aspect provides an instruction execution method, where the method is executed by an execution unit EU of a processor, and the EU is configured to acquire a first instruction from an instruction queue of a bus interface unit BIU, execute the first instruction, and write a result of executing the first instruction into a register set, where the EU includes a token management unit and at least two instruction execution units, the at least two instruction execution units include a first instruction execution unit and a second instruction execution unit, and the method includes:
sending, by the token management unit, a first read token to the first instruction execution unit, where the first read token is used to instruct the first instruction execution unit to read an operand of the first instruction that is to be executed;
reading, by the first instruction execution unit, the operand of the first instruction according to an instruction of the first read token;
releasing, by the first instruction execution unit, the first read token after the process of reading the operand of the first instruction starts;
sending, by the token management unit after determining the release of the first read token, a second read token to the second instruction execution unit, where the second read token is used to instruct the second instruction execution unit to read an operand of a second instruction that is to be executed, and the second instruction is a to-be-executed instruction neighboring to the first instruction in the instruction queue;
executing, by the first instruction execution unit, the first instruction according to the operand of the first instruction; and
writing, by the first instruction execution unit, the result of executing the first instruction into the register set.

With reference to the first aspect, in a first possible implementation manner of the first aspect, the writing, by the first instruction execution unit, the result of executing the first instruction into the register set includes:
receiving, by the first instruction execution unit, a first write token sent by the token management unit, where the first write token is used to instruct the first instruction execution unit to write the result of executing the first instruction into the register set;
writing, by the first instruction execution unit according to an instruction of the first write token after executing the first instruction, the result of executing the first instruction into the register set; and
releasing, by the first instruction execution unit, the first write token after the process of writing the result of executing the first instruction into the register set starts, so that the token management unit sends a second write token to the second instruction execution unit after determining the release of the first write token, where the second write token is used to instruct the second instruction execution unit to write a result of executing the second instruction into the register set.

With reference to the first possible implementation manner of the first aspect, in a second possible implementation manner of the first aspect, the releasing, by the first instruction execution unit, the first write token after the process of writing the result of executing the first instruction into the register set starts includes:
releasing, by the first instruction execution unit, the first write token at a first moment before a complete moment of the process of writing the result of executing the first instruction into the register set, and sending a first write token release message to the token management unit, where a time length between the first moment and the complete moment is equal to a preset first threshold, and the first threshold is less than a time length of the process of writing the result of executing the first instruction into the register set; and
the sending, by the token management unit after determining the release of the first write token, a second write token to the second instruction execution unit includes:
   sending, by the token management unit, the second write token to the second instruction execution unit when receiving the first write token release message.

With reference to the first aspect or either of the foregoing possible implementation manners of the first aspect, in a third possible implementation manner of the first aspect, the releasing, by the first instruction execution unit, the first read token after the process of reading the operand of the first instruction starts includes:
releasing, by the first instruction execution unit, the first read token at a second moment before a complete moment of the process of reading the operand of the first instruction, and sending a first read token release message to the token management unit, where a time length between the second moment and the complete moment is equal to a preset second threshold, and the second threshold is less than a time length of the process of reading the operand of the first instruction; and
the sending, by the token management unit after determining the release of the first read token, a second read token to the second instruction execution unit includes:
   sending, by the token management unit, the second read token to the second instruction execution unit when receiving the first read token release message.

With reference to any one of the first aspect or the foregoing possible implementation manners of the first aspect, in a fourth possible implementation manner of the first aspect, the EU further includes a pre-decoding unit, where
the acquiring a first instruction from an instruction queue of a BIU includes: acquiring, by the pre-decoding unit, the first instruction from the instruction queue of the BIU; and
the method further includes: performing, by the pre-decoding unit, pre-decoding on the first instruction, determining that an instruction execution unit configured to execute the first instruction is the first instruction execution unit, sending the first instruction to the first instruction execution unit, and sending an identifier of the first instruction execution unit to the token management unit.

With reference to the foregoing fourth possible implementation manner of the first aspect, in a fifth possible implementation manner of the first aspect, the method further includes:
acquiring, by the pre-decoding unit, the second instruction from the instruction queue of the BIU;
performing, by the pre-decoding unit, pre-decoding on the second instruction, and determining that an instruction execution unit configured to execute the second instruction is the second instruction execution unit; and
sending, by the pre-decoding unit, the second instruction to the second instruction execution unit, and sending an identifier of the second instruction execution unit to the token management unit.

With reference to the foregoing fifth possible implementation manner of the first aspect, in a sixth possible implementation manner of the first aspect, before the sending, by the token management unit, a first read token to the first instruction execution unit, the method further includes: receiving, by the token management unit, the identifier of the first instruction execution unit from the pre-decoding unit;
the sending, by the token management unit, a first read token to the first instruction execution unit includes: sending, by the token management unit, the first read token to the first instruction execution unit according to the identifier of the first instruction execution unit;
before the reading, by the first instruction execution unit, the operand of the first instruction according to an instruction of the first read token, the method further includes: receiving, by the first instruction execution unit, the first instruction from the pre-decoding unit;
before the sending the second read token to the second instruction execution unit, the method further includes: receiving, by the token management unit, the identifier of the second instruction execution unit from the pre-decoding unit; and
the sending the second read token to the second instruction execution unit includes: sending the second read token to the second instruction execution unit according to the identifier of the second instruction execution unit.

A second aspect provides a processor, where an execution unit EU of the processor is configured to acquire a first instruction from an instruction queue of a bus interface unit BIU, execute the first instruction, and write a result of executing the first instruction into a register set, where the EU includes a token management unit and at least two instruction execution units, and the at least two instruction execution units include a first instruction execution unit and a second instruction execution unit:
the token management unit is configured to send a first read token to the first instruction execution unit, where the first read token is used to instruct the first instruction execution unit to read an operand of the first instruction that is to be executed;
the first instruction execution unit is configured to: read the operand of the first instruction according to an instruction of the first read token, and release the first read token after the process of reading the operand of the first instruction starts;
the token management unit is further configured to send a second read token to the second instruction execution unit after determining the release of the first read token, where the second read token is used to instruct the second instruction execution unit to read an operand of a second instruction that is to be executed, and the second instruction is a to-be-executed instruction neighboring to the first instruction in the instruction queue; and
the first instruction execution unit is further configured to: execute the first instruction according to the operand of the first instruction, and write the result of executing the first instruction into the register set.

With reference to the second aspect, in a first possible implementation manner of the second aspect, the token management unit is further configured to send a first write token to the first instruction execution unit, where the first write token is used to instruct the first instruction execution unit to write the result of executing the first instruction into the register set;
the first instruction execution unit is specifically configured to: receive the first write token sent by the token management unit, and write, according to an instruction of the first write token after executing the first instruction, the result of executing the first instruction into the register set; and release the first write token after the process of writing the result of executing the first instruction into the register set starts; and
the token management unit is further configured to send, after determining the release of the first write token, a second write token to the second instruction execution unit, where the second write token is used to instruct the second instruction execution unit to write a result of executing the second instruction into the register set.

With reference to the first possible implementation manner of the second aspect, in a second possible implementation manner of the second aspect, the token management unit is further configured to send the first write token to the first instruction execution unit, where the first write token is used to instruct the first instruction execution unit to write the result of executing the first instruction into the register set;
the first instruction execution unit is specifically configured to: receive the first write token sent by the token management unit, and write, according to an instruction of the first write token after executing the first instruction, the result of executing the first instruction into the register set; and release the first write token after the process of writing the result of executing the first instruction into the register set starts; and
the token management unit is further configured to send, after determining the release of the first write token, a second write token to the second instruction execution unit, where the second write token is used to instruct the second instruction execution unit to write a result of executing the second instruction into the register set.

With reference to any one of the second aspect or the foregoing possible implementation manners of the second aspect, in a third possible implementation manner of the second aspect, the first instruction execution unit is specifically configured to: release the first read token at a second moment before a complete moment of the process of reading the operand of the first instruction, and send a first read token release message to the token management unit, where a time length between the second moment and the complete moment is equal to a preset second threshold, and the second threshold is less than a time length of the process of reading the operand of the first instruction; and
the token management unit is specifically configured to send the second read token to the second instruction execution unit when receiving the first read token release message.

With reference to any one of the second aspect or the foregoing possible implementation manners of the second aspect, in a fourth possible implementation manner of the second aspect, the EU further includes a pre-decoding unit, where
the pre-decoding unit is configured to acquire the first instruction from the instruction queue of the BIU; and
the pre-decoding unit is further configured to: perform pre-decoding on the first instruction, determine that an instruction execution unit configured to execute the first instruction is the first instruction execution unit, send the first instruction to the first instruction execution unit, and send an identifier of the first instruction execution unit to the token management unit.

With reference to the fourth possible implementation manner of the second aspect, in a fifth possible implementation manner of the second aspect, the pre-decoding unit is further configured to:
acquire the second instruction from the instruction queue of the BIU;
perform pre-decoding on the second instruction, and determine that an instruction execution unit configured to execute the second instruction is the second instruction execution unit; and
send the second instruction to the second instruction execution unit, and send an identifier of the second instruction execution unit to the token management unit.

With reference to the fifth possible implementation manner of the second aspect, in a sixth possible implementation manner of the second aspect, the token management unit is further configured to: receive the identifier of the first instruction execution unit from the pre-decoding unit, and receive the identifier of the second instruction execution unit from the pre-decoding unit;
the first instruction execution unit is further configured to receive the first instruction from the pre-decoding unit; and
the token management unit is specifically configured to: send the first read token to the first instruction execution unit according to the identifier of the first instruction execution unit; and send the second read token to the second instruction execution unit according to the identifier of the second instruction execution unit.

A third aspect provides a communications device, where the communications device includes a processor and a memory, and the processor and the memory are connected by using a bus system;
the processor includes the processor according to the foregoing second aspect or any one of the possible implementation manners of the second aspect; and
the memory is configured to store a program and data that are run by the processor.

In the embodiments of the present invention, an instruction execution unit releases a read token in time in a process of executing an instruction, which provides convenience for a token management unit to allocate a read token to another instruction execution unit, so that the token management unit can perform coordinated management and control on a read token, thereby ensuring instruction execution efficiency.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a micro-computer;
FIG. 2 is a schematic diagram of a structure of a processor;
FIG. 3 is a flowchart of an instruction execution method according to an embodiment of the present invention;
FIG. 4 is a schematic diagram of a pipeline of an instruction execution unit according to an embodiment of the present invention;
FIG. 5 is a block diagram of an EU according to an embodiment of the present invention;
FIG. 6A and FIG. 6B are a flowchart of an instruction execution method according to another embodiment of the present invention;
FIG. 7 is a flowchart of an instruction execution method according to another embodiment of the present invention;
FIG. 8 is a schematic diagram of a pipeline of an instruction execution unit according to another embodiment of the present invention;
FIG. 9 is another schematic diagram of a pipeline of an instruction execution unit according to another embodiment of the present invention;
FIG. 10 is a block diagram of a processor according to another embodiment of the present invention;
FIG. 11 is a block diagram of a communications device according to an embodiment of the present invention;
FIG. 12 is a block diagram of a communications device according to another embodiment of the present invention; and
FIG. 13 is a schematic diagram of a processor being applied to a smart wireless meter reading system according to an embodiment of the present invention.

### DESCRIPTION OF EMBODIMENTS

The following clearly and completely describes the technical solutions in embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

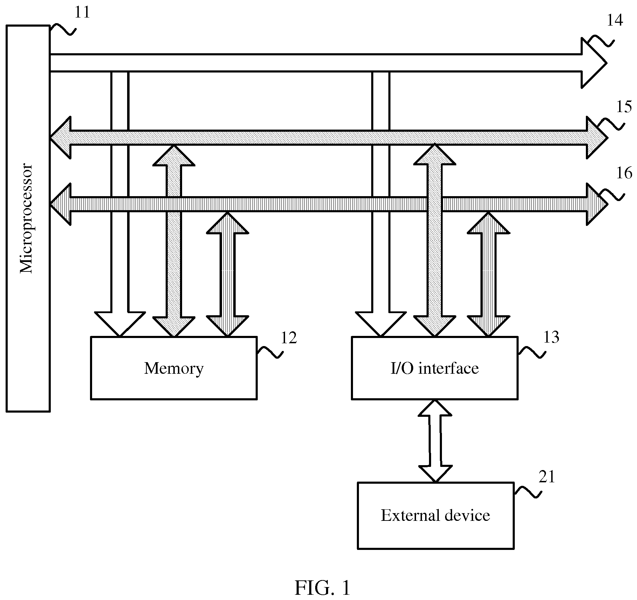

FIG. 1 is a schematic diagram of a micro-computer. The micro-computer in FIG. 1 includes a microprocessor 11, a memory 12, and an I/O interface 13. The microprocessor 11, the memory 12, and the I/O interface 13 are connected by using a bus, and as shown in FIG. 1, the bus includes an address bus 14, a data bus 15, and a control bus 16. Besides, the I/O interface 13 is connected to an external device 21.

The memory 12 may be a volatile memory or a non-volatile memory, or may include both of a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and the random access memory is used as an external cache. According to an exemplary but not limiting description, RAMs of many forms are applicable, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that a memory in this specification aims to include but is not limited to these and any memory of another proper type.

The microprocessor 11 is a central processing unit (Central Processing Unit, CPU) of the micro-computer, and may also be called a processor. The processor is an integrated circuit chip, and has a signal processing capability. The processor may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware assembly, which may implement or perform the methods, the steps, and logical block diagrams that are disclosed in the embodiments of the present invention.

It may be understood that the embodiments described in this specification may be implemented by hardware, software, firmware, middleware, microcode, or a combination thereof. As for hardware implementation, a processing unit may be implemented in one or more application-specific integrated circuits (Application Specific Integrated Circuits, ASIC), digital signal processors (Digital Signal Processing, DSP), digital signal processing devices (DSP Device, DSPD), programmable logical devices (Programmable Logic Device, PLD), field-programmable gate arrays (Field-Programmable Gate Array, FPGA), general purpose processors, controllers, microcontrollers, microprocessors, other electronic devices that execute a function described in this application, or a combination thereof.

When an embodiment is implemented in software, firmware, middleware, or microcode, program code, or a code segment, the software, firmware, middleware, or microcode, program code, or code segment may be stored in a machine readable medium of a storage component, and the like. The code segment may indicate any combination of a process, a function, a subprogram, a program, a routine, a subroutine, a module, a software group, a class, or an instruction and a data structure, or a program statement. The code segment may be coupled to another code segment or hardware circuit by transmitting and/or receiving information, data, an independent variable, a parameter, or content of the memory. The information, independent variable, parameter, and data may be transferred, forwarded, or transmitted in any proper manners including memory sharing, information transfer, token transfer, network transmission, and the like.

As for software implementation, the technology described in this specification may be implemented by executing a function module (such as a process, a function, or the like) described in this specification. Software code may be stored in a memory unit and executed by the processor. The memory unit may be implemented inside the processor or outside the processor. In the latter case, the memory unit is coupled to the processor by various known means in this field in a communications manner.

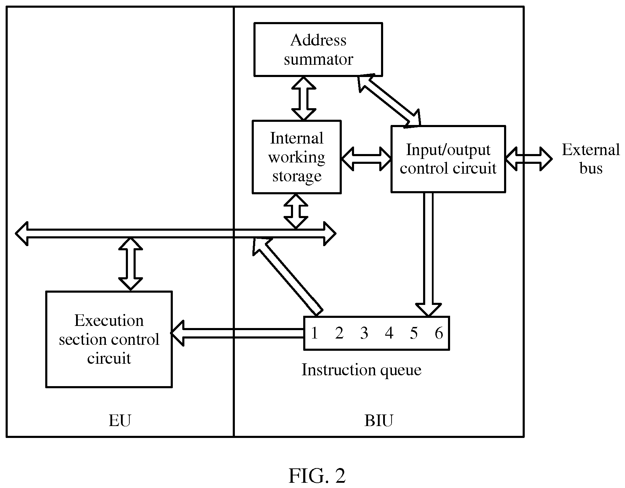

As shown in FIG. 2, the processor includes an execution unit (Execute Unit, EU) and a bus interface unit (Bus Interface Unit, BIU).

An input and output control circuit in the BIU is connected to an external bus, and can access the memory 12 or the I/O interface 13. An address summator is configured to complete translation from a logical address to a physical address.

It may be understood that the BIU acquires an instruction from the memory 12, and writes the instruction into an instruction sequence. The EU may acquire an instruction from the instruction queue of the BIU. The queue is a first in first out (first in first out, FIFO) linear table. Therefore, a sequence of acquiring an instruction by the EU from the instruction queue of the BIU is consistent with a sequence of acquiring an instruction by the BIU from the memory.

An execution section control circuit of the EU is configured to execute an instruction. Specifically, the EU acquires an instruction from the instruction queue of the BIU, performs pre-decoding on the instruction, and executes the instruction.

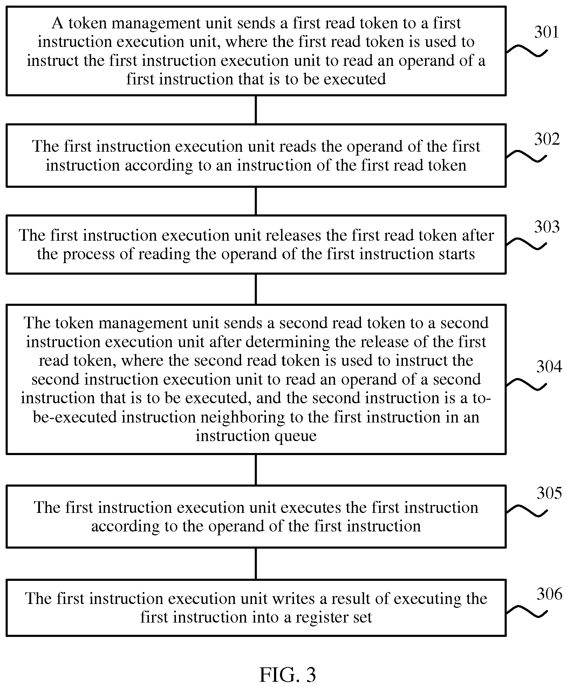

An embodiment of the present invention relates to improvement of a process of executing an instruction by the EU. Specifically, FIG. 3 is a flowchart of an instruction execution method according to an embodiment of the present invention. The method shown in FIG. 3 is executed by an EU of a processor. The EU is configured to: acquire a first instruction from an instruction queue of a BIU, execute the first instruction, and write a result of executing the first instruction into a register set. The EU includes a token management unit and at least two instruction execution units, where the at least two instruction execution units include a first instruction execution unit and a second instruction execution unit. After the first instruction is acquired, the method shown in FIG. 3 includes:
301. The token management unit sends a first read token to the first instruction execution unit, where the first read token is used to instruct the first instruction execution unit to read an operand of the first instruction that is to be executed.
302. The first instruction execution unit reads the operand of the first instruction according to an instruction of the first read token.
303. The first instruction execution unit releases the first read token after the process of reading the operand of the first instruction starts.
304. The token management unit sends a second read token to the second instruction execution unit after determining the release of the first read token, where the second read token is used to instruct the second instruction execution unit to read an operand of a second instruction that is to be executed, and the second instruction is a to-be-executed instruction neighboring to the first instruction in the instruction queue.
305. The first instruction execution unit executes the first instruction according to the operand of the first instruction.
306. The first instruction execution unit writes the result of executing the first instruction into the register set.

In this embodiment of the present invention, an instruction execution unit releases a read token in time in a process of executing an instruction, which provides convenience for a token management unit to allocate a read token to an execution unit of a next instruction, so that the token management unit can perform coordinated management and control on a read token, thereby ensuring instruction execution efficiency.

It should be understood that in this embodiment of the present invention, the token management unit and the instruction execution unit may be a logical circuit. The token management unit may also be called a register token (Register Token, Reg Token) unit or a register token circuit. The instruction execution unit (instruction Execute Unit, iEU) is an instruction execution unit inside the processor.

For example, the at least two instruction execution units may include: a multiply and accumulate (Multiply And Accumulate, MAC) unit, an arithmetic logic unit (Arithmetic Logic Unit, ALU), a look up table (Look Up Table, LUT) unit, a load (Load, LD) unit, a store (Store, ST) unit, and the like. The ALU includes an and gate (And Gate) and an or gate (Or Gate).

It may be understood that the token management unit connects to each instruction execution unit. Specifically, a connection may be performed by using an internal bus.

Optionally, the EU may further include a pre-decoding (pre decode) unit. Specifically, the acquiring the first instruction from the instruction queue of the BIU may refer to: the pre-decoding unit acquires the first instruction from the instruction queue of the BIU. Further, the pre-decoding unit performs pre-decoding on the first instruction, and determines that an instruction execution unit configured to execute the first instruction is the first instruction execution unit. Afterward, the pre-decoding unit may send the first instruction to the first instruction execution unit, and sends an identifier of the first instruction execution unit to the token management unit.

Correspondingly, it may be understood that before 301, the token management unit receives the identifier of the first instruction execution unit from the pre-decoding unit. In addition, in 301, the token management unit sends the first read token to the first instruction execution unit according to the identifier of the first instruction execution unit.

Correspondingly, it may be understood that, before 302, the first instruction execution unit receives the first instruction from the pre-decoding unit.

In this embodiment of the present invention, it is assumed that a to-be-executed instruction neighboring to the first instruction in the instruction queue is the second instruction. Similarly, the pre-decoding unit acquires the second instruction from the instruction queue of the BIU. Further, the pre-decoding unit performs pre-decoding on the second instruction, and determines that an instruction execution unit configured to execute the second instruction is the second instruction execution unit. Afterward, the pre-decoding unit may send the second instruction to the second instruction execution unit, and sends an identifier of the second instruction execution unit to the token management unit.

Correspondingly, it may be understood that before 304, the token management unit receives the identifier of the second instruction execution unit from the pre-decoding unit. And, in 304, the token management unit sends the second read token to the second instruction execution unit according to the identifier of the second instruction execution unit.

It should be noted that in this embodiment of the present invention, an identifier may be a sequence number, may be a physical address, or may be another identifier, which is not limited in the present invention.

Optionally, in this embodiment of the present invention, after receiving identifiers of multiple instruction execution units from the pre-decoding unit, the token management unit may generate an identifier sequence from the identifiers of the multiple instruction execution units. The identifier sequence records a sequence of the received identifiers. Afterward, the token management unit may successively perform steps similar to 304 according to the identifier sequence.

Optionally, in 302, the first instruction execution unit reads the operand of the first instruction after determining that the operand of the first instruction is ready, and after receiving the first read token from the token management unit.

Specifically, if the pre-decoding unit determines that the operand of the first instruction comes from the register set, the first instruction execution unit reads the operand of the first instruction from the register set. If the pre-decoding unit determines that the operand of the first instruction comes from the first instruction, the first instruction execution unit reads the operand of the first instruction from the first instruction.

Optionally, the operand of the first instruction may be read by generating a read clock (clk).

Optionally, in an embodiment, 306 may include: The token management unit sends a first write token to the first instruction execution unit, where the first write token is used to instruct the first instruction execution unit to write the result of executing the first instruction into the register set; the first instruction execution unit writes, according to an instruction of the first write token after executing the first instruction, the result of executing the first instruction into the register set; the first instruction execution unit releases the first write token after the process of writing the result of executing the first instruction into the register set starts; and after determining the release of the first write token, the token management unit sends a second write token to the second instruction execution unit, where the second write token is used to instruct the second instruction execution unit to write a result of executing the second instruction into the register set.

In this way, the token management unit can implement control over a write operation of the instruction execution unit by using a write token, that is, the token management unit can perform coordinated management on a process of writing into the register set, thereby ensuring efficiency.

Optionally, in this embodiment of the present invention, after receiving identifiers of multiple instruction execution units from the pre-decoding unit, the token management unit may generate an identifier sequence from the identifiers of the multiple instruction execution units. The identifier sequence records a sequence of the received identifiers. Afterward, the token management unit may determine, according to the identifier sequence, an instruction execution unit to which a write token is sent.

In an embodiment, that the first instruction execution unit releases the first write token after the process of writing the result of executing the first instruction into the register set starts may include: the first instruction execution unit releases the first write token at a first moment before a complete moment of the process of writing the result of executing the first instruction into the register set, and sends a first write token release message to the token management unit, where a time length between the first moment and the complete moment is equal to a preset first threshold, and the first threshold is less than a time length of the process of writing the result of executing the first instruction into the register set.

Optionally, the first instruction execution unit may use a time delay circuit to release the first write token. For example, if the time delay circuit sets a first time delay t1, the first write token is released by using the time delay circuit, that is, after the first time delay t1.

Correspondingly, that after determining the release of the first write token, the token management unit sends a second write token to the second instruction execution unit may include: when receiving the first write token release message, the token management unit sends the second write token to the second instruction execution unit.

Similarly, it may be understood that the second instruction execution unit may write, according to an instruction of the second write token after receiving the second write token, a result of executing the second instruction into the register set.

It should be noted that the first threshold in this embodiment of the present invention is a preset value, and a magnitude of the first threshold is not limited in this embodiment of the present invention. It only needs to be ensured that 306 does not conflict with the process of writing, by the second instruction unit, the result of executing the second instruction into the register set.

In this way, the instruction execution unit releases a write token before a write operation ends, so that the token management unit can send a write token to an instruction execution unit of a next execution instruction in time, and the instruction execution unit can adequately run in parallel, thereby further improving efficiency.

Similarly, in an embodiment, 303 may include: The first instruction execution unit releases the first read token at a second moment before a complete moment of the process of reading the operand of the first instruction, and sends a first read token release message to the token management unit, where a time length between the second moment and the complete moment is equal to a preset second threshold, and the second threshold is less than a time length of the process of reading the operand of the first instruction.

Optionally, in 303, the first instruction execution unit may use a time delay circuit to release the first read token. For example, if the time delay circuit sets a second time delay t2, the first read token is released by using the time delay circuit, that is, after the second time delay t2.

Correspondingly, 304 may include: The token management unit sends the second read token to the second instruction execution unit when receiving the first read token release message.

Similar to 302, it may be understood that the second instruction execution unit may read the operand of the second instruction according to an instruction of the second read token after receiving the second read token.

It should be noted that the second threshold in this embodiment of the present invention is a preset value, and a magnitude of the second threshold is not limited in this embodiment of the present invention. It only needs to be ensured that 302 does not conflict with the process of reading, by the second instruction execution unit, the operand of the second instruction.

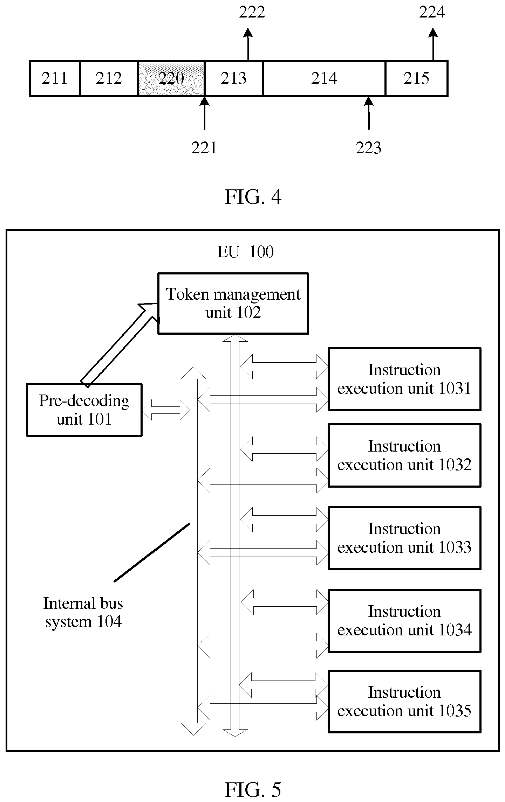

Specifically, for an instruction execution unit, such as the first instruction execution unit, a process of executing the first instruction may be shown in FIG. 4. The process includes:
211. Read (fetch) an instruction.

Specifically, the first instruction execution unit reads the first instruction.

212. Decode (decode) the instruction.

Optionally, the instruction execution unit may determine a source of an operand of the first instruction in 211, or may determine, by decoding the instruction, a source of an operand of the first instruction in 212, which is not limited in this embodiment of the present invention.

213. Read an operand of the instruction.

Specifically, the first instruction execution unit reads the operand of the first instruction according to the instruction of the first read token after receiving the first read token from the token management unit.

It may be understood that the first instruction execution unit receives the first read token from the token management unit at a moment of 221.

Besides, it may be understood that the first instruction execution unit releases the first read token at a moment of 222. That is, the first instruction execution unit releases the first read token before the process of reading the operand of the first instruction ends.

214. Execute the instruction.

Specifically, the first instruction execution unit executes the first instruction according to the operand of the first instruction.

215. Write operation.

The write operation in 215 refers to writing the result of executing the instruction into the register set.

Specifically, after receiving the first write token from the token management unit and completing execution of the first instruction, the first instruction execution unit writes, according to the instruction of the first write token, the result of executing the first instruction into the register set.

It may be understood that the first instruction execution unit receives the first write token from the token management unit at a moment of 223. However, at the moment of 223, the process of executing the first instruction by the first instruction execution unit is not completed, and therefore the first instruction execution unit does not start the write operation at the moment of 223.

In addition, it may be understood that the first instruction execution unit releases the first write token at a moment of 224. That is, the first instruction execution unit releases the first write token before the process of write operation ends.

In addition, a 220 stage is further included in FIG. 4. It may be understood that 220 is a waiting stage. After 212, the first instruction execution unit has determined that the operand of the first instruction is ready, but has not received the first read token from the token management unit. The 220 stage may be understood as a stage of waiting for the first read token.

It may be understood that the EU continuously acquires instruction code from the instruction queue of the BIU, and continuously executes an instruction with full load. A process of executing an instruction by either of the at least two instruction execution units is similar to the process, shown in FIG. 3, of executing the first instruction by the first instruction execution unit.

It should be noted that in this embodiment of the present invention, a quantity of the at least two instruction execution units is not limited. For example,

FIG. 5 is a schematic diagram of the EU. An EU 100 in FIG. 5 includes a pre-decoding unit 101, a token management unit 102, and at least two instruction execution units. In FIG. 5, the quantity of the at least two instruction execution units is 5, which are respectively an instruction execution unit 1031, an instruction execution unit 1032, an instruction execution unit 1033, an instruction execution unit 1034, and an instruction execution unit 1035. In addition, the pre-decoding unit 101, the token management unit 102, and the at least two instruction execution units are connected by using an internal bus system 104.

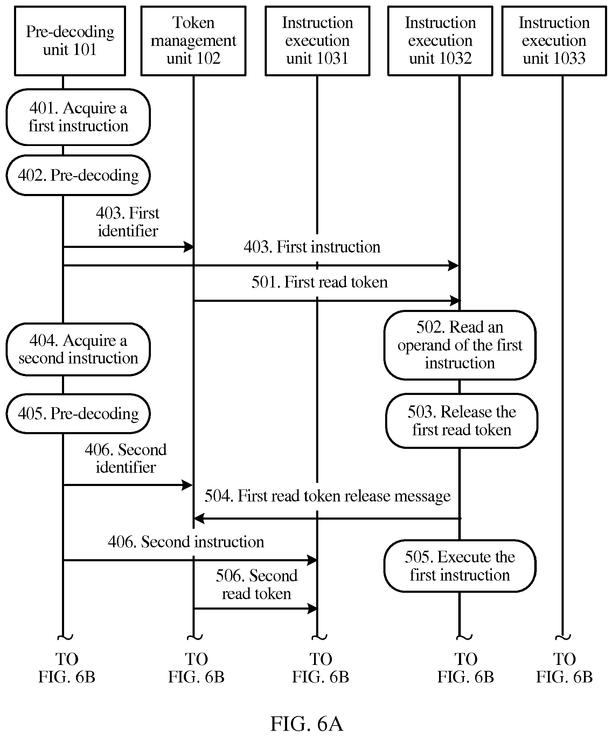

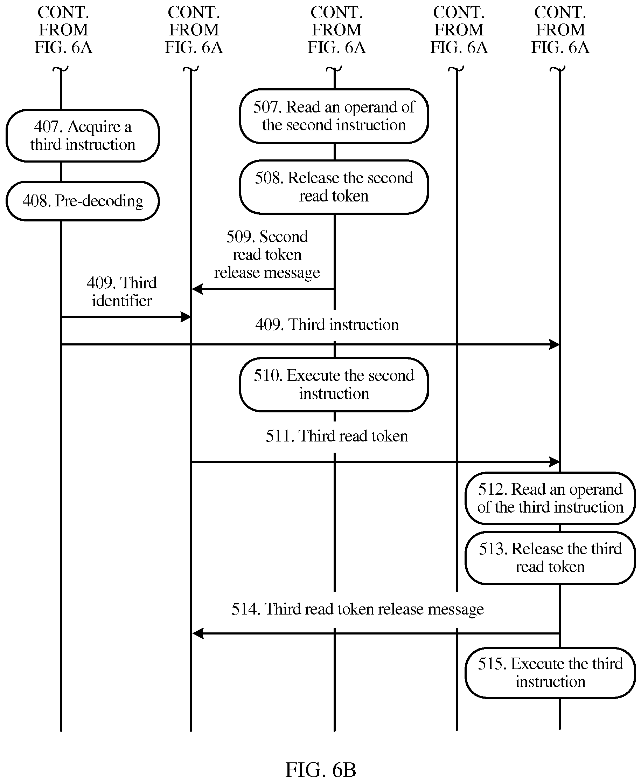

FIG. 6A and FIG. 6B are a flowchart of an instruction execution method according to another embodiment of the present invention. This method is based on the EU 100 shown in FIG. 5, and is described by using three instructions as an example. The method shown in FIG. 6A and FIG. 6B includes:
401. The pre-decoding unit 101 acquires a first instruction.

Specifically, the pre-decoding unit 101 acquires the first instruction from an instruction queue of a BIU.

402. The pre-decoding unit 101 performs pre-decoding on the first instruction.

Specifically, the pre-decoding unit 101 determines that an instruction execution unit that is to execute the first instruction is the instruction execution unit 1032. In addition, the pre-decoding unit 101 may determine that an identifier of the instruction execution unit 1032 is a first identifier.

Optionally, the pre-decoding unit 101 may also determine a source of an operand of the first instruction by pre-decoding.

403. The pre-decoding unit 101 sends a first identifier to the token management unit 102, and sends the first instruction to the instruction execution unit 1032.

Optionally, the pre-decoding unit 101 may also notify the instruction execution unit 1032 of the source of the operand of the first instruction.

404. The pre-decoding unit 101 acquires a second instruction.

Specifically, the pre-decoding unit 101 acquires the second instruction from the instruction queue of the BIU, where the second instruction is an instruction neighboring to the first instruction in the instruction queue.

405. The pre-decoding unit 101 performs pre-decoding on the second instruction.

Specifically, the pre-decoding unit 101 determines that an instruction execution unit that is to execute the second instruction is the instruction execution unit 1031. In addition, the pre-decoding unit 101 may determine that an identifier of the instruction execution unit 1031 is a second identifier.

Optionally, the pre-decoding unit 101 may also determine a source of an operand of the second instruction by pre-decoding.

406. The pre-decoding unit 101 sends a second identifier to the token management unit 102, and sends the second instruction to the instruction execution unit 1031.

Optionally, the pre-decoding unit 101 may also notify the instruction execution unit 1031 of the source of the operand of the second instruction.

407. The pre-decoding unit 101 acquires a third instruction.

Specifically, the pre-decoding unit 101 acquires the third instruction from the instruction queue of the BIU, where the third instruction is an instruction neighboring to the second instruction in the instruction queue.

408. The pre-decoding unit 101 performs pre-decoding on the third instruction.

Specifically, the pre-decoding unit 101 determines that an instruction execution unit that is to execute the third instruction is the instruction execution unit 1033. In addition, the pre-decoding unit 101 may determine that an identifier of the instruction execution unit 1033 is a third identifier.

Optionally, the pre-decoding unit 101 may also determine a source of an operand of the third instruction by pre-decoding.

409. The pre-decoding unit 101 sends a third identifier to the token management unit 102, and sends the third instruction to the instruction execution unit 1033.

Optionally, the pre-decoding unit 101 may also notify the instruction execution unit 1033 of the source of the operand of the third instruction.

It may be understood that the pre-decoding unit 101 continuously acquires instructions from the instruction queue of the BIU, performs pre-decoding on the instructions, sends the instructions to corresponding instruction execution units that are to execute the instructions, and sends identifiers of the corresponding instruction execution units to the token management unit 102.

501. The token management unit 102 sends a first read token to the instruction execution unit 1032.

It may be understood that 501 is executed after 403. Specifically, the token management unit 102 sends the first read token to the instruction execution unit 1032 according to the first identifier.

It may be understood that before 501, the token management unit 102 generates the first read token.

502. The instruction execution unit 1032 reads the operand of the first instruction according to an instruction of the first read token.

It may be understood that 502 is executed after 403 and 501.

Specifically, the source of the operand of the first instruction may be the first instruction, or may be a register set.

503. The instruction execution unit 1032 releases the first read token.

Optionally, the instruction execution unit 1032 may release the first read token at a first moment before a complete moment of the process of reading the operand of the first instruction.

A time length between the first moment and the complete moment may be less than a first time length threshold.

504. The instruction execution unit 1032 sends a first read token release message to the token management unit 102.

It may be understood that after 503, the instruction execution unit 1032 may generate the first read token release message.

505. The instruction execution unit 1032 executes the first instruction.

It may be understood that 505 is executed after 502 ends.

506. The token management unit 102 sends a second read token to the instruction execution unit 1031.

It may be understood that 506 is executed after 406 and 504. Specifically, after receiving the first read token release message, the token management unit 102 sends the second read token to the instruction execution unit 1031 according to the second identifier.

It may be understood that before 506, the token management unit 102 generates the second read token.

507. The instruction execution unit 1031 reads the operand of the second instruction according to an instruction of the second read token.

It may be understood that 507 is executed after 406 and 506.

Specifically, the source of the operand of the second instruction may be the second instruction, or may be the register set.

508. The instruction execution unit 1031 releases the second read token.

Optionally, the instruction execution unit 1031 may release the second read token at a second moment before a complete moment of the process of reading the operand of the second instruction.

A time length between the second moment and the complete moment may be less than a second time length threshold.

509. The instruction execution unit 1031 sends a second read token release message to the token management unit 102.

It may be understood that after 508, the instruction execution unit 1031 may generate the second read token release message.

510. The instruction execution unit 1031 executes the second instruction.

It may be understood that 510 is executed after 507 ends.

511. The token management unit 102 sends a third read token to the instruction execution unit 1033.

It may be understood that 511 is executed after 409. Specifically, after receiving the second read token release message, the token management unit 102 sends the third read token to the instruction execution unit 1033 according to the third identifier.

It may be understood that before 511, the token management unit 102 generates the third read token.

512. The instruction execution unit 1033 reads the operand of the third instruction according to an instruction of the third read token.

It may be understood that 512 is executed after 409 and 511.

Specifically, the source of the operand of the third instruction may be the third instruction, or may be the register set.

513. The instruction execution unit 1033 releases the third read token.

Optionally, the instruction execution unit 1033 may release the third read token at a third moment before a complete moment of the process of reading the operand of the third instruction.

A time length between the third moment and the complete moment may be less than a third time length threshold.

514. The instruction execution unit 1033 sends a third read token release message to the token management unit 102.

It may be understood that after 513, the instruction execution unit 1033 may generate the third read token release message.

515. The instruction execution unit 1033 executes the third instruction.

It may be understood that 515 is executed after 512 ends.

In addition, in this embodiment of the present invention, when an instruction execution unit needs to jump to a new instruction in a process of executing an instruction, for example, if the instruction execution unit 1031 needs to jump to a fourth instruction in a process of executing the second instruction, the pre-decoding unit 101 acquires the fourth instruction and determines an instruction execution unit that executes the fourth instruction. For example, it is assumed that the instruction execution unit that executes the fourth instruction is the instruction execution unit 1032.

In this case, the pre-decoding unit 101 sends the fourth instruction to the instruction execution unit 1032. It should be noted that after clear work for executing a jump by the instruction execution unit 1031 ends, the pre-decoding unit 101 sends the fourth instruction to the instruction execution unit 1032. Moreover, the token management unit 102 generates a fourth read token and sends the fourth read token to the instruction execution unit 1032, so that the instruction execution unit 1032 reads an operand of the fourth instruction and executes the fourth instruction.

That is, when a new instruction is jumped to, the token management unit 102 directly generates, without depending on a release message of another read token, a read token for an instruction execution unit that executes the new instruction.

In addition, it may be understood that after the new instruction is executed, the instruction execution unit does not write a result of executing the new instruction into the register set, but returns to an instruction execution process performed before the jump.

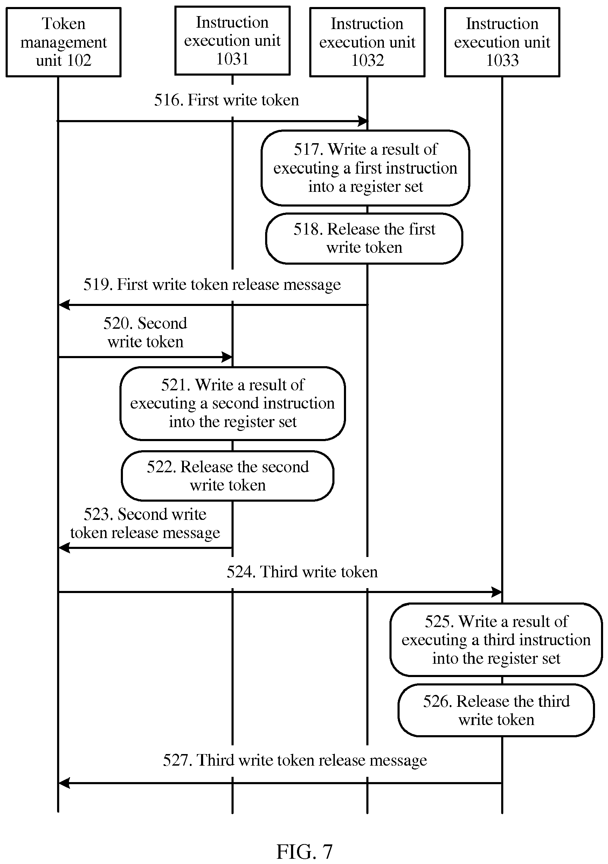

Further, as shown in FIG. 7, after the embodiment shown in FIG. 6A and FIG. 6B, the method may further include:
516. The token management unit 102 sends a first write token to the instruction execution unit 1032.

It may be understood that 516 is executed after 504. Specifically, the token management unit 102 sends the first write token to the instruction execution unit 1032 according to the first identifier.

It may be understood that before 516, the token management unit 102 generates the first write token.

517. The instruction execution unit 1032 writes, according to an instruction of the first write token, a result of executing the first instruction into the register set.

It may be understood that 517 is executed after 516 and 505.

518. The instruction execution unit 1032 releases the first write token.

Optionally, the instruction execution unit 1032 may release the first write token at a fourth moment before a complete moment of the process of 517.

A time length between the fourth moment and the complete moment may be less than a fourth time length threshold.

519. The instruction execution unit 1032 sends a first write token release message to the token management unit 102.

It may be understood that after 518, the instruction execution unit 1032 may generate the first write token release message.

520. The token management unit 102 sends a second write token to the instruction execution unit 1031.

It may be understood that 520 is executed after 509 and 519. Specifically, after receiving the first write token release message, the token management unit 102 sends the second write token to the instruction execution unit 1031 according to the second identifier.

It may be understood that before 520, the token management unit 102 generates the second write token.

521. The instruction execution unit 1031 writes, according to an instruction of the second write token, a result of executing the second instruction into the register set.

It may be understood that 521 is executed after 520 and 510.

522. The instruction execution unit 1031 releases the second write token.

Optionally, the instruction execution unit 1031 may release the second write token at a fifth moment before a complete moment of the process of 521.

A time length between the fifth moment and the complete moment may be less than a fifth time length threshold.

523. The instruction execution unit 1031 sends a second write token release message to the token management unit 102.

It may be understood that after 522, the instruction execution unit 1031 may generate the second write token release message.

524. The token management unit 102 sends a third write token to the instruction execution unit 1033.

It may be understood that 524 is executed after 514 and 523. Specifically, after receiving the second write token release message, the token management unit 102 sends the third write token to the instruction execution unit 1033 according to the third identifier.

It may be understood that before 524, the token management unit 102 generates the third write token.

525. The instruction execution unit 1032 writes, according to an instruction of the third write token, a result of executing the third instruction into the register set.

It may be understood that 525 is executed after 524 and 515.

526. The instruction execution unit 1033 releases the third write token.

Optionally, the instruction execution unit 1033 may release the third write token at a sixth moment before a complete moment of the process of 525.

A time length between the sixth moment and the complete moment may be less than a third time length threshold.

527. The instruction execution unit 1033 sends a third write token release message to the token management unit 102.

It may be understood that after 526, the instruction execution unit 1033 may generate the third write token release message.

It should be noted that in this embodiment of the present invention, if the source of the operand of the second instruction is the result of executing the first instruction, it indicates that the operand of the second instruction is dependent on the first instruction, and the two are in a dependent relationship. In this case, it may be understood that 507 is executed after 517.

Similarly, if the operand of the third instruction is dependent on a result of the second instruction, it may be understood that 512 is executed after 521.

Similarly, if the operand of the third instruction is dependent on a result of the first instruction, it may be understood that 512 is executed after 517.

It should be noted that in the embodiments shown in FIG. 6A, FIG. 6B, and FIG. 7, sequence numbers do not mean an execution sequence, that is, the sequence number in front of each step cannot be construed as limitation on the execution sequence.

For the processes shown in FIG. 6A, FIG. 6B, and FIG. 7, FIG. 8 is a schematic diagram of a pipeline of the instruction execution 1031, the instruction execution unit 1032, and the instruction execution unit 1033. The operands of the first instruction, the second instruction, and the third instruction are not in a dependent relationship.

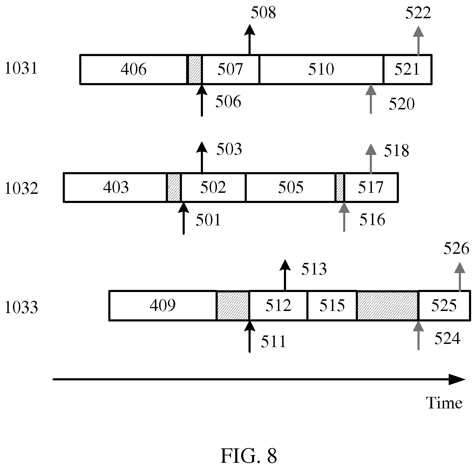

In FIG. 8, 506, 501, and 511 are processes of acquiring a read token respectively by the instruction execution unit 1031, the instruction execution unit 1032, and the instruction execution unit 1033. 508, 503, and 513 are processes of releasing a read token respectively by the instruction execution unit 1031, the instruction execution unit 1032, and the instruction execution unit 1033. 520, 516, and 524 are processes of acquiring a write token respectively by the instruction execution unit 1031, the instruction execution unit 1032, and the instruction execution unit 1033. 522, 518, and 526 are processes of releasing a write token respectively by the instruction execution unit 1031, the instruction execution unit 1032, and the instruction execution unit 1033.

For the processes shown in FIG. 6A, FIG. 6B, and FIG. 7, FIG. 9 is another schematic diagram of a pipeline of the instruction execution unit 1031, the instruction execution unit 1032, and the instruction execution unit 1033. The operands of the first instruction and the third instruction are in a dependent relationship. Specifically, the operand of the third instruction is dependent on the result of executing the first instruction.

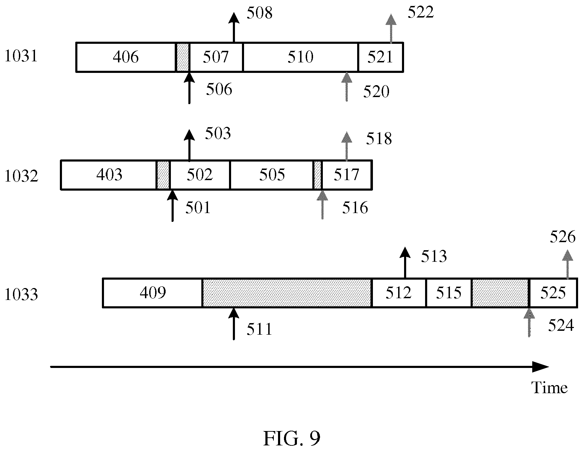

In FIG. 9, 512 is executed after 517. It may be understood that, for the instruction execution unit 1033, when the third read token is acquired in 511, the operand of the third instruction is not ready. 512 is executed only after 517 is executed and after the operand of the third instruction is ready.

In FIG. 8 and FIG. 9, a time period denoted by oblique lines is a waiting stage. Specifically, waiting stages before 507, 502, and 512 refer to stages at which an operand of an instruction is not ready or a read token is not received; and waiting stages before 517 and 525 refer to stages at which a write token is not received. By contrasting FIG. 9 and FIG. 8, it may be seen that when instructions are in a dependent relationship, a time of a waiting stage is longer.

It may be seen from FIG. 8 and FIG. 9 that pipelines are performed in parallel, and a pipeline layout is compact.

In this embodiment of the present invention, an instruction execution unit releases a read token in time in a process of executing an instruction, which provides convenience for a token management unit to allocate a read token to another instruction execution unit, so that the token management unit can perform coordinated management and control on a read token, thereby ensuring instruction execution efficiency.

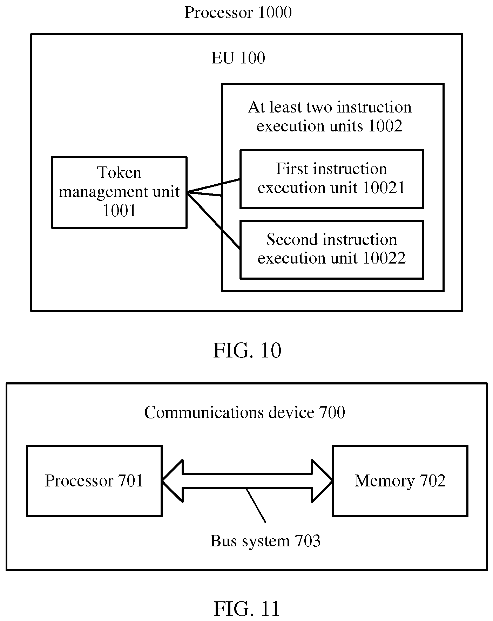

FIG. 10 is a block diagram of a processor according to an embodiment of the present invention. A processor 1000 in FIG. 10 includes an EU 100. The EU 100 includes a token management unit 1001 and at least two instruction execution units 1002. The at least two instruction execution units 1002 include a first instruction execution unit 10021 and a second instruction execution unit 10022.

The execution unit EU 100 is configured to: acquire a first instruction from an instruction queue of a bus interface unit BIU, execute the first instruction, and write a result of executing the first instruction into a register set. Specifically:
the token management unit 1001 is configured to send a first read token to the first instruction execution unit 10021, where the first read token is used to instruct the first instruction execution unit 10021 to read an operand of the first instruction that is to be executed;
the first instruction execution unit 10021 is configured to: read the operand of the first instruction according to an instruction of the first read token, and release the first read token after the process of reading the operand of the first instruction starts;
the token management unit 1001 is further configured to: send a second read token to the second instruction execution unit 10022 after determining the release of the first read token, where the second read token is used to instruct the second instruction execution unit 10022 to read an operand of a second instruction that is to be executed, and the second instruction is a to-be-executed instruction neighboring to the first instruction in the instruction queue; and
the first instruction execution unit 10021 is further configured to: execute the first instruction according to the operand of the first instruction, and write the result of executing the first instruction into the register set.

In this embodiment of the present invention, an instruction execution unit releases a read token in time in a process of executing an instruction, which provides convenience for a token management unit to allocate a read token to another instruction execution unit, so that the token management unit can perform coordinated management and control on a read token, thereby ensuring instruction execution efficiency.

Optionally, in an embodiment, the token management unit 1001 is further configured to send a first write token to the first instruction execution unit 10021, where the first write token is used to instruct the first instruction execution unit 10021 to write the result of executing the first instruction into the register set.

The first instruction execution unit 10021 is specifically configured to: receive the first write token sent by the token management unit 1001, and write, according to an instruction of the first write token after executing the first instruction, the result of executing the first instruction into the register set; and release the first write token after the process of writing the result of executing the first instruction into the register set starts.

The token management unit 1001 is further configured to send, after determining the release of the first write token, a second write token to the second instruction execution unit 10022, where the second write token is used to instruct the second instruction execution unit 10022 to write a result of executing the second instruction into the register set.

Optionally, in another embodiment, the first instruction execution unit 10021 is specifically configured to: release the first write token at a first moment before a complete moment of the process of writing the result of executing the first instruction into the register set, and send a first write token release message to the token management unit 1001, where a time length between the first moment and the complete moment is equal to a preset first threshold, and the first threshold is less than a time length of the process of writing the result of executing the first instruction into the register set.

The token management unit 1001 is specifically configured to: send the second write token to the second instruction execution unit 10022 when receiving the first write token release message.

Optionally, in another embodiment, the first instruction execution unit 10021 is specifically configured to: release the first read token at a second moment before a complete moment of the process of reading the operand of the first instruction, and send a first read token release message to the token management unit 1001, where a time length between the second moment and the complete moment is equal to a preset second threshold, and the second threshold is less than a time length of the process of reading the operand of the first instruction.

The token management unit 1001 is specifically configured to: send the second read token to the second instruction execution unit 10022 when receiving the first read token release message.

Optionally, in another embodiment, the EU 100 further includes a pre-decoding unit, where the pre-decoding unit is configured to acquire the first instruction from the instruction queue of the BIU; and the pre-decoding unit is further configured to perform pre-decoding on the first instruction, determine that an instruction execution unit configured to execute the first instruction is the first instruction execution unit, send the first instruction to the first instruction execution unit, and send an identifier of the first instruction execution unit to the token management unit.

Optionally, in another embodiment, the pre-decoding unit is further configured to: acquire the second instruction from the instruction queue of the BIU; perform pre-decoding on the second instruction, and determine that an instruction execution unit configured to execute the second instruction is the second instruction execution unit; and send the second instruction to the second instruction execution unit, and send an identifier of the second instruction execution unit to the token management unit.

Optionally, in another embodiment, the token management unit 1001 is further configured to: receive the identifier of the first instruction execution unit from the pre-decoding unit, and receive the identifier of the second instruction execution unit from the pre-coding unit. The first instruction execution unit 10021 is further configured to receive the first instruction from the pre-decoding unit. The token management unit 1001 is specifically configured to: send the first read token to the first instruction execution unit according to the identifier of the first instruction execution unit; and send the second read token to the second instruction execution unit according to the identifier of the second instruction execution unit.

It may be understood that in this embodiment of the present invention, the at least two instruction execution units 1002 may include multiple instruction execution units. The multiple instruction execution units may be configured to execute instructions of various types, or two instruction execution units of the multiple execution units may also be configured to execute instructions of a same type.

In this embodiment of the present invention, a quantity of the instruction execution units 102 may be increased to improve processing performance of the processor 1000, that is, achieve an effect of increasing a speed by enlarging an area.

It may be understood that the processor 1000 shown in FIG. 10 may implement the processes executed by the processor in the embodiments in the foregoing FIG. 3 to FIG. 9. To avoid repetition, details are not described herein.

FIG. 11 is a block diagram of a communications device according to an embodiment of the present invention. A communications device 700 shown in FIG. 11 includes a processor 701 and a memory 702, where the processor 701 and the memory 702 are connected by using a bus system 703.

The processor 701 includes the processor 1000 shown in FIG. 10.

The memory 702 is configured to store a program and data that are run by the processor 701.

In this way, the processor in the foregoing embodiments of the present invention may be applied to a communications device, and the foregoing processor possesses higher processing efficiency, so that the processor can improve communications device performance.

It should be noted that, the processor 701 may be an integrated circuit chip, and has a signal processing capability. In an implementation process, steps in the foregoing method may be implemented by using an integrated logic circuit of hardware in the processor or an instruction in a form of software. The foregoing processor 701 may be a general purpose processor, a DSP, an ASIC, an FPGA, or another programmable logic component, a discrete gate or a transistor logic component, or a discrete hardware component, which may implement or perform the methods, the steps, and logical block diagrams that are disclosed in the embodiments of the present invention. The general purpose processor may be a microprocessor, or the processor may also be any normal processor or the like. The steps of the methods disclosed with reference to the embodiments of the present invention may be directly performed and implemented by a hardware decoding processor, or performed and implemented by a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium may be located in the memory. The processor 701 reads information from the memory 702, and implements the steps of the foregoing method in combination with the hardware.

It may be understood that the memory 702 in this embodiment of the present invention may be a volatile memory or a non-volatile memory, or may include both of a volatile memory and a non-volatile memory. The non-volatile memory may be a ROM, a PROM, an EPROM, an EEPROM, or a flash memory. The volatile memory may be a RAM, and the RAM is used as an external cache. According to an exemplary but not limiting description, RAMs of many forms are applicable, such as an SRAM, a DRAM, an SDRAM, a DDR SDRAM, an ESDRAM, an SLDRAM, and a DR RAM. The memory of the systems and methods described in this specification aims to include but is not limited to these and any memory of another proper type.

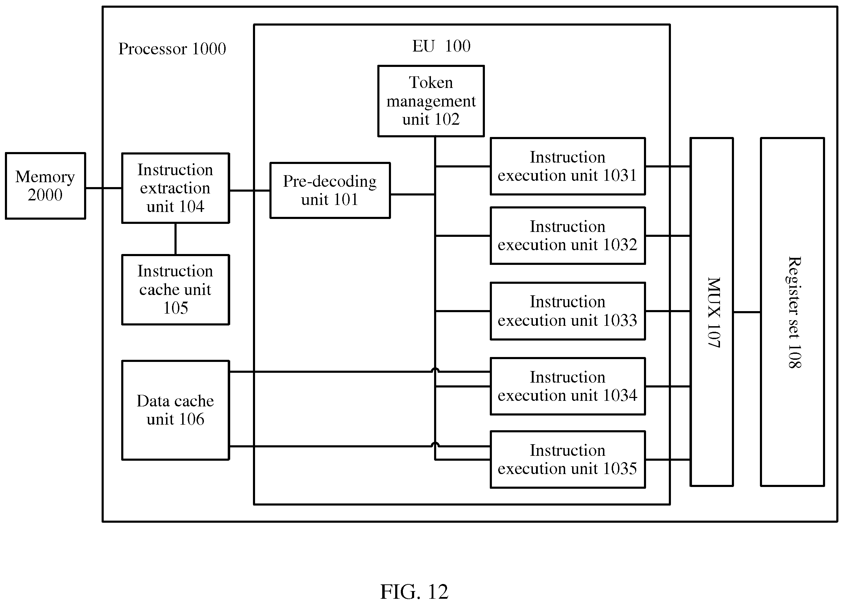

FIG. 12 is a block diagram of a communications device according to another embodiment of the present invention. The communications device includes a processor 1000 and a memory 2000. The processor 1000 includes an EU 100, an instruction extraction unit 104, an instruction cache unit 105, a data cache unit 106, a multiplexer (multiplexer, MUX) 107, and a register set 108. The EU 100 includes a pre-decoding unit 101, a token management unit 102, and five instruction execution units: an instruction execution unit 1031, an instruction execution 1032, an instruction execution unit 1033, an instruction execution unit 1034, and an instruction execution unit 1035.

All components in FIG. 12 are connected together by using a bus system, where in addition to a data bus, the bus system further includes a power bus, a control bus, and a status signal bus. However, for clarity of description, various buses are marked as the bus system in FIG. 12.

The processor 1000 may be an integrated circuit chip, and has a signal processing capability. In an implementation process, steps in the foregoing method may be implemented by using an integrated logic circuit of hardware in the processor or an instruction in a form of software. The foregoing processor 1000 may be a general purpose processor, a DSP, an ASIC, an FPGA, or another programmable logic component, a discrete gate or a transistor logic component, or a discrete hardware component, which may implement or perform the methods, the steps, and logical block diagrams that are disclosed in the embodiments of the present invention. The general purpose processor may be a microprocessor, or the processor may also be any normal processor or the like. The steps of the methods disclosed with reference to the embodiments of the present invention may be directly performed and implemented by a hardware decoding processor, or performed and implemented by a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium may be located in the memory. The processor 1000 reads information from the memory 2000, and implements the steps of the foregoing method in combination with the hardware.

It may be understood that the memory 2000 in this embodiment of the present invention may be a volatile memory or a non-volatile memory, or may include both of a volatile memory and a non-volatile memory. The non-volatile memory may be a ROM, a PROM, an EPROM, an EEPROM, or a flash memory. The volatile memory may be a RAM, and the RAM is used as an external cache. According to an exemplary but not limiting description, RAMs of many forms are applicable, such as an SRAM, a DRAM, an SDRAM, a DDR SDRAM, an ESDRAM, an SLDRAM, and a DR RAM. The memory of the systems and methods described in this specification aims to include but is not limited to these and any memory of another proper type.

It may be understood that the embodiments described in this specification may be implemented by hardware, software, firmware, middleware, microcode, or a combination thereof. As for hardware implementation, a processing unit may be implemented in one or more ASICs, DSPs, DSPDs, PLDs, FPGAs, general purpose processors, controllers, microcontrollers, microprocessors, other electronic devices that execute a function described in this application, or a combination thereof.

When an embodiment is implemented in software, firmware, middleware, or microcode, program code, or a code segment, the software, firmware, middleware, or microcode, program code, or code segment may be stored in a machine readable medium of a storage component, and the like. The code segment may indicate any combination of a process, a function, a subprogram, a program, a routine, a subroutine, a module, a software group, a class, or an instruction and a data structure, or a program statement. The code segment may be coupled to another code segment or hardware circuit by transmitting and/or receiving information, data, an independent variable, a parameter, or content of the memory. The information, independent variable, parameter, and data may be transferred, forwarded, or transmitted in any proper manners including memory sharing, information transfer, token transfer, network transmission, and the like.

As for software implementation, the technology described in this specification may be implemented by executing a function module (such as a process, a function, or the like) described in this specification. Software code may be stored in a memory unit and executed by the processor. The memory unit may be implemented inside the processor or outside the processor. In the latter case, the memory unit is coupled to the processor by various known means in this field in a communications manner.

Optionally, it is assumed that the instruction execution unit 1031 is a multiply and accumulate (Multiply And Accumulate, MAC) unit, the instruction execution unit 1032 is an arithmetic logic unit (Arithmetic Logic Unit, ALU), the instruction execution unit 1033 is a look up table (Look Up Table, LUT) unit, the instruction execution unit 1034 is a load (Load, LD) unit, and the instruction execution unit 1035 is a store (Store, ST) unit.

The instruction extraction unit 104 is configured to acquire an instruction sequence from the memory 2000. The instruction cache unit 105 is configured to cache the instruction sequence by using the instruction extraction unit 104.

The pre-decoding unit 101 is configured to acquire the instruction sequence from the instruction extraction unit 104.

The data cache unit 106 is configured to cache data by using the load unit and the store unit.

A multiplexer may also be called a multiplex translation buffer, a data selector, a multi-way switch, or the like.

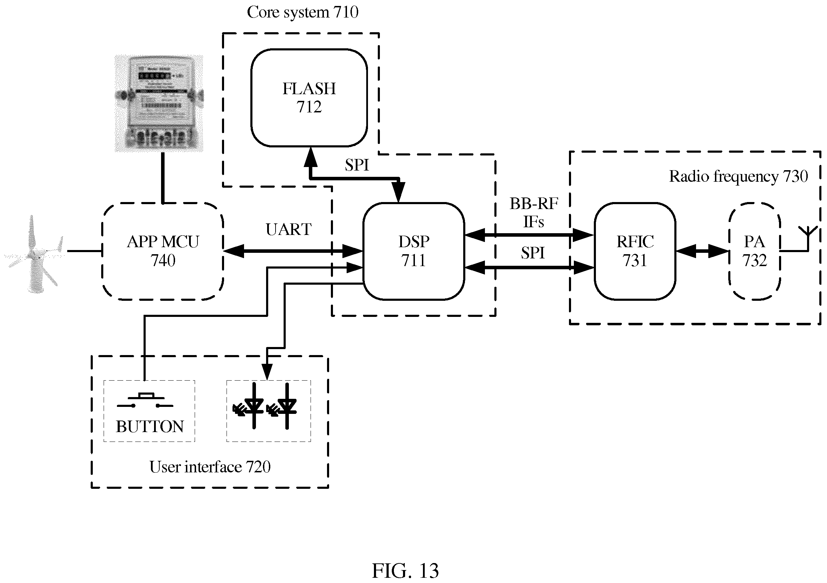

FIG. 13 is a schematic diagram of a processor being applied to a smart wireless meter reading system according to an embodiment of the present invention. The smart wireless meter reading system in FIG. 13 includes a core system 710, a user interface 720, a radio frequency 730, and a meter reading application micro control unit (APP Micro Control Unit, APP MCU) 740. The core system 710 includes a digital signal processor (Digital Signal Processor, DSP) 711 and a FLASH 712. The radio frequency 730 includes a radio frequency integrated circuit (Radio Frequency Integrated Circuit, RFIC) 731 and a power amplifier (Power Amplifier, PA) 732.

The FLASH 712 is a memory chip, and is configured to store a program run by the DSP. The RFIC 731 may be a wireless signal processing chip.

It may be understood that the processor in the foregoing embodiments of the present invention may be applied to the DSP 711 in FIG. 13, and the DSP 711 may be a single-core digital signal processor that is configured to process a wireless baseband signal, thereby implementing wireless service transmission.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An instruction execution method, wherein the method is executed by an execution unit EU of a processor, and the EU is configured to acquire a first instruction from an instruction queue of a bus interface unit BIU, execute the first instruction, and write a result of executing the first instruction into a register set, wherein the EU comprises a token management unit and at least two instruction execution units, the at least two instruction execution units comprise a first instruction execution unit and a second instruction execution unit, and the method comprises:
sending, by the token management unit, a first read token to the first instruction execution unit, wherein the first read token is used to instruct the first instruction execution unit to read an operand of the first instruction that is to be executed;
reading, by the first instruction execution unit, the operand of the first instruction according to an instruction of the first read token;
releasing, by the first instruction execution unit, the first read token after the process of reading the operand of the first instruction starts;
sending, by the token management unit after determining the release of the first read token, a second read token to the second instruction execution unit, wherein the second read token is used to instruct the second instruction execution unit to read an operand of a second instruction that is to be executed, and the second instruction is a to-be-executed instruction neighboring to the first instruction in the instruction queue;
executing, by the first instruction execution unit, the first instruction according to the operand of the first instruction; and
writing, by the first instruction execution unit, the result of executing the first instruction into the register set.

2. The method according to claim 1, wherein the writing, by the first instruction execution unit, the result of executing the first instruction into the register set comprises:
receiving, by the first instruction execution unit, a first write token sent by the token management unit, wherein the first write token is used to instruct the first instruction execution unit to write the result of executing the first instruction into the register set;
writing, by the first instruction execution unit according to an instruction of the first write token after executing the first instruction, the result of executing the first instruction into the register set; and
releasing, by the first instruction execution unit, the first write token after the process of writing the result of executing the first instruction into the register set starts, so that the token management unit sends a second write token to the second instruction execution unit after determining the release of the first write token, wherein the second write token is used to instruct the second instruction execution unit to write a result of executing the second instruction into the register set.

3. The method according to claim 2, wherein the releasing, by the first instruction execution unit, the first write token after the process of writing the result of executing the first instruction into the register set starts comprises:
releasing, by the first instruction execution unit, the first write token at a first moment before a complete moment of the process of writing the result of executing the first instruction into the register set, and sending a first write token release message to the token management unit, wherein a time length between the first moment and the complete moment is equal to a preset first threshold, and the first threshold is less than a time length of the process of writing the result of executing the first instruction into the register set; and
the sending, by the token management unit after determining the release of the first write token, a second write token to the second instruction execution unit comprises:
sending, by the token management unit, the second write token to the second instruction execution unit when receiving the first write token release message.

4. The method according to any one of claims 1 to 3, wherein the releasing, by the first instruction execution unit, the first read token after the process of reading the operand of the first instruction starts comprises:
releasing, by the first instruction execution unit, the first read token at a second moment before a complete moment of the process of reading the operand of the first instruction, and sending a first read token release message to the token management unit, wherein a time length between the second moment and the complete moment is equal to a preset second threshold, and the second threshold is less than a time length of the process of reading the operand of the first instruction; and
the sending, by the token management unit after determining the release of the first read token, a second read token to the second instruction execution unit comprises:
sending, by the token management unit, the second read token to the second instruction execution unit when receiving the first read token release message.

5. The method according to any one of claims 1 to 4, wherein the EU further comprises a pre-decoding unit, wherein
the acquiring a first instruction from an instruction queue of a BIU comprises:
acquiring, by the pre-decoding unit, the first instruction from the instruction queue of the BIU; and
the method further comprises: performing, by the pre-decoding unit, pre-decoding on the first instruction, determining that an instruction execution unit configured to execute the first instruction is the first instruction execution unit, sending the first instruction to the first instruction execution unit, and sending an identifier of the first instruction execution unit to the token management unit.

6. The method according to claim 5, wherein the method further comprises:
acquiring, by the pre-decoding unit, the second instruction from the instruction queue of the BIU;
performing, by the pre-decoding unit, pre-decoding on the second instruction, and determining that an instruction execution unit configured to execute the second instruction is the second instruction execution unit; and
sending, by the pre-decoding unit, the second instruction to the second instruction execution unit, and sending an identifier of the second instruction execution unit to the token management unit.

7. The method according to claim 6, wherein
before the sending, by the token management unit, a first read token to the first instruction execution unit, the method further comprises: receiving, by the token management unit, the identifier of the first instruction execution unit from the pre-decoding unit;
the sending, by the token management unit, a first read token to the first instruction execution unit comprises: sending, by the token management unit, the first read token to the first instruction execution unit according to the identifier of the first instruction execution unit;
before the reading, by the first instruction execution unit, the operand of the first instruction according to an instruction of the first read token, the method further comprises: receiving, by the first instruction execution unit, the first instruction from the pre-decoding unit;
before the sending the second read token to the second instruction execution unit, the method further comprises: receiving, by the token management unit, the identifier of the second instruction execution unit from the pre-decoding unit; and
the sending the second read token to the second instruction execution unit comprises: sending the second read token to the second instruction execution unit according to the identifier of the second instruction execution unit.

8. A processor, wherein an execution unit EU of the processor is configured to acquire a first instruction from an instruction queue of a bus interface unit BIU, execute the first instruction, and write a result of executing the first instruction into a register set, wherein the EU comprises a token management unit and at least two instruction execution units, and the at least two instruction execution units comprise a first instruction execution unit and a second instruction execution unit:
the token management unit is configured to send a first read token to the first instruction execution unit, wherein the first read token is used to instruct the first instruction execution unit to read an operand of the first instruction that is to be executed;
the first instruction execution unit is configured to: read the operand of the first instruction according to an instruction of the first read token, and release the first read token after the process of reading the operand of the first instruction starts;
the token management unit is further configured to send a second read token to the second instruction execution unit after determining the release of the first read token, wherein the second read token is used to instruct the second instruction execution unit to read an operand of a second instruction that is to be executed, and the second instruction is a to-be-executed instruction neighboring to the first instruction in the instruction queue; and
the first instruction execution unit is further configured to: execute the first instruction according to the operand of the first instruction, and write the result of executing the first instruction into the register set.

9. The processor according to claim 8, wherein
the token management unit is further configured to send a first write token to the first instruction execution unit, wherein the first write token is used to instruct the first instruction execution unit to write the result of executing the first instruction into the register set;
the first instruction execution unit is specifically configured to: receive the first write token sent by the token management unit, and write, according to an instruction of the first write token after executing the first instruction, the result of executing the first instruction into the register set; and release the first write token after the process of writing the result of executing the first instruction into the register set starts; and
the token management unit is further configured to send, after determining the release of the first write token, a second write token to the second instruction execution unit, wherein the second write token is used to instruct the second instruction execution unit to write a result of executing the second instruction into the register set.

10. The processor according to claim 9, wherein
the first instruction execution unit is specifically configured to: release the first write token at a first moment before a complete moment of the process of writing the result of executing the first instruction into the register set, and send a first write token release message to the token management unit, wherein a time length between the first moment and the complete moment is equal to a preset first threshold, and the first threshold is less than a time length of the process of writing the result of executing the first instruction into the register set; and
the token management unit is specifically configured to: send the second write token to the second instruction execution unit when receiving the first write token release message.

11. The processor according to any one of claims 8 to 10, wherein
the first instruction execution unit is specifically configured to: release the first read token at a second moment before a complete moment of the process of reading the operand of the first instruction, and send a first read token release message to the token management unit, wherein a time length between the second moment and the complete moment is equal to a preset second threshold, and the second threshold is less than a time length of the process of reading the operand of the first instruction; and
the token management unit is specifically configured to send the second read token to the second instruction execution unit when receiving the first read token release message.

12. The processor according to any one of claims 8 to 11, wherein the EU further comprises a pre-decoding unit, wherein
the pre-decoding unit is configured to acquire the first instruction from the instruction queue of the BIU; and
the pre-decoding unit is further configured to: perform pre-decoding on the first instruction, determine that an instruction execution unit configured to execute the first instruction is the first instruction execution unit, send the first instruction to the first instruction execution unit, and send an identifier of the first instruction execution unit to the token management unit.

13. The processor according to claim 12, wherein the pre-decoding unit is further configured to:
acquire the second instruction from the instruction queue of the BIU;
perform pre-decoding on the second instruction, and determine that an instruction execution unit configured to execute the second instruction is the second instruction execution unit; and
send the second instruction to the second instruction execution unit, and send an identifier of the second instruction execution unit to the token management unit.

14. The processor according to claim 13, wherein
the token management unit is further configured to: receive the identifier of the first instruction execution unit from the pre-decoding unit, and receive the identifier of the second instruction execution unit from the pre-decoding unit;
the first instruction execution unit is further configured to receive the first instruction from the pre-decoding unit; and
the token management unit is specifically configured to: send the first read token to the first instruction execution unit according to the identifier of the first instruction execution unit; and send the second read token to the second instruction execution unit according to the identifier of the second instruction execution unit.

15. A communications device, wherein the communications device comprises a processor and a memory, and the processor and the memory are connected by using a bus system;
the processor comprises the processor according to any one of claims 8 to 14; and
the memory is configured to store a program and data that are run by the processor.
